# EUROPEAN PATENT SPECIFICATION

(11) **EP 0 632 434 B1**
(45) Date of publication and mention of the grant of the patent: **04.03.1998**
(21) Application number: 94304613.6
(22) Date of filing: 24.06.1994
(51) Int. Cl.: G11B 7/00, B41J 2/455, G06K 15/22, H04N 1/06

(54) **Internal drum plotter**
Plotter mit innenaufzeichnender Trommel
Traceur à tambour d'enregistrement interne

(30) Priority: 30.06.1993 IL 10618893
(43) Date of publication of application: 04.01.1995
(73) Proprietor: SCITEX CORPORATION LTD., Herzliya 46103 (IL)
(72) Inventor: Steinblatt, Serge, Ra'anana 43522 (IL); Ben-David, Ilan, Petach Tikva 49542 (IL)
(74) Representative: Hillier, Peter

(56) References cited:
- EP-A- 0 111 390
- EP-A- 0 264 341
- EP-A- 0 307 095
- EP-A- 0 430 799
- EP-A- 0 475 399
- EP-A- 0 483 827
- US-A- 4 633 455
- PATENT ABSTRACTS OF JAPAN vol. 15, no. 250 (E-1082) 26 June 1991 & JP-A-03 079 132 (NIPPON HOSO KYOKAI) 4 April 1991
- PATENT ABSTRACTS OF JAPAN vol. 14, no. 313 (P-1072) 5 July 1990 & JP-A-02 101 644 (SONY CORP.) 13 April 1990
- PATENT ABSTRACTS OF JAPAN vol. 15, no. 107 (P-1179) 14 March 1991 & JP-A-03 001 331 (SANYO ELECTRIC CO LTD) 8 January 1991

## Description

The present invention relates to internal drum plotters generally and more particularly to multi-beam internal drum plotters.

Various types of multi-beam internal drum plotters are known in the art. An example of such plotters appears in European Patent 0307095.

Generally speaking, the prior art plotters have limited accuracy due to wobble and cross-scan errors as the result of inaccuracies in the manufacture and mounting of a derotating element which is employed to prevent beam crossing under rotation and in the apparatus for rotating the derotating element.

The present invention seeks to provide an improved internal drum plotter which overcomes the inaccuracies mentioned above.

Accordingly, there is provided in one aspect of the invention an internal drum plotter including apparatus for mounting a recording substrate in a generally cylindrical configuration about a longitudinal axis;
a multi-beam light source assembly disposed at a first location along the longitudinal axis, and including a plurality of light sources which are separated from each other along an axis perpendicular to the longitudinal axis;
light directing apparatus operative to direct light received from the multi-beam light source assembly to the recording substrate; and
apparatus for transmitting light from said multi-beam light source assembly to said light directing apparatus including image rotating apparatus disposed along the longitudinal axis and characterised by;
detector apparatus for sensing inaccuracies in light transmission to the light directing apparatus and feedback apparatus responsive to the sensed inaccuracies for correcting the relative orientations of at least one of the multi-beam assembly, the light directing apparatus, and the apparatus for transmitting light, in order to remove the sensed inaccuracies.
In a second aspect the invention provides an internal drum plotter including apparatus for mounting a recording substrate in a generally cylindrical configuration about a longitudinal axis;
a multi-beam light source assembly disposed at a first location along the longitudinal axis, and including a plurality of light sources which are separated from each other along an axis perpendicular to the longitudinal axis;
light directing apparatus operative to direct light received from the multi-beam light source assembly to the recording substrate; and
apparatus for transmitting light from said multi-beam light source assembly to said light directing apparatus including image rotating apparatus disposed along the longitudinal axis and characterised by;
at least one optical wedge in operative engagement with the image rotating apparatus for substantially eliminating inaccuracies resulting from inaccuracies in manufacture and mounting of the image rotating apparatus and the apparatus for rotating same.

The light directing apparatus typically comprises a mirror, a penta prism or any other suitable optical apparatus. In all cases, the light directing apparatus will be considered to have a mirror surface.

In a preferred embodiment the multi-beam light source assembly is operative to rotate at the same speed as the light directing apparatus. In this embodiment the light transmitting apparatus may advantageously comprise a pair of lenses which are fixed with respect to the longitudinal axis and to the substrate. The light source assembly may comprise a rotary optical joint.

A data input is provided to the light sources using an electrical rotary joint. Preferably, in this case the rotating light source assembly includes a power supply which rotates together with a plurality of light sources.

Alternatively a data input is provided to the light sources in a wireless manner.

In a further alternative the rotating light source assembly comprises an integrated optical element receiving an electrical data input.

### BRIEF DESCRIPTION OF THE DRAWINGS

The present invention will be understood and appreciated more fully from the following detailed description, taken in conjunction with the drawings in which:
Fig. 1 is a simplified illustration of an internal drum plotter constructed and operative in accordance with a preferred embodiment of the present invention;
Fig. 2 is an illustration of one preferred embodiment of an internal drum plotter constructed and operative in accordance with the present invention;
Figs. 3A, 3B and 3C illustrate another preferred embodiment of an internal drum plotter constructed and operative in accordance with the present invention;
Fig. 4 is an illustration of one preferred embodiment of an internal drum plotter constructed and operative in accordance with a preferred embodiment of the present invention wherein the light source assembly rotates at the same speed as the light directing apparatus;
Fig. 5 is an illustration of one embodiment of rotating multi-beam light source assembly in the internal drum plotter of Fig. 4;
Fig. 6 is an illustration of another embodiment of rotating multi-beam light source assembly in the internal drum plotter of Fig. 4;
Fig. 7 is an illustration of one embodiment of rotating multi-beam light source assembly in the internal drum plotter of Fig. 4;
Figs. 8A and 8B illustrate limits of continuous variation of line-to-line resolution in the embodiments of Figs. 2 and 3; and
Figs. 9A and 9B illustrate limits of continuous variation of line-to-line resolution in the embodiments of Fig. 4.

### DETAILED DESCRIPTION OF PREFERRED EMBODIMENTS

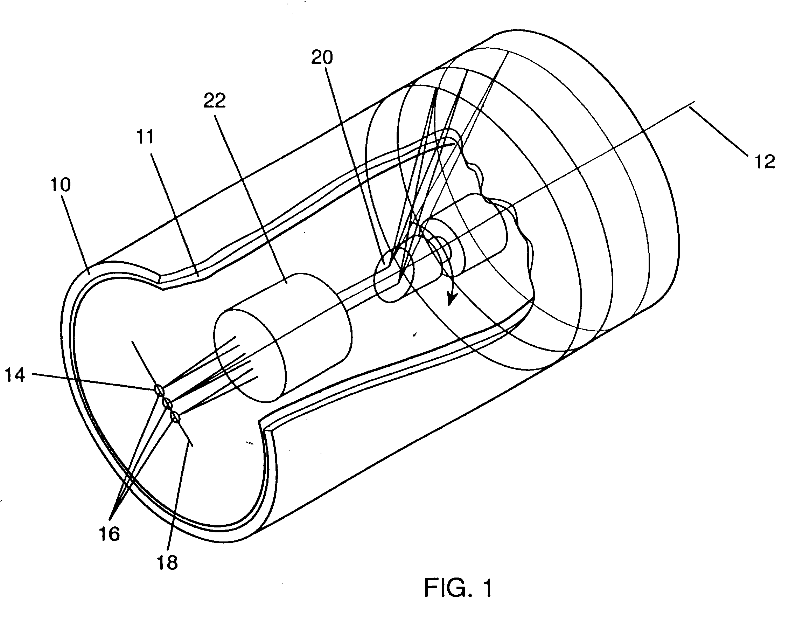

Reference is now made to Fig. 1, which is a simplified illustration of an internal drum plotter constructed and operative in accordance with a preferred embodiment of the present invention.

The internal drum plotter of Fig. 1 comprises a generally circular cylindrical drum 10 for mounting a recording substrate 11 in a generally cylindrical configuration therewithin about a longitudinal axis 12.

A multi-beam light source assembly 14 is disposed at a first location along the longitudinal axis 12. The location may be fixed, or alternatively may move axially along the longitudinal axis 12. Preferably light source assembly 14 comprises a plurality of light sources 16, which are separated from each other along an axis 18 perpendicular to the longitudinal axis 12.

Disposed for rotation about longitudinal axis 12 is light directing apparatus 20, which is operative to direct light received from the multi-beam light source assembly 14 to the recording substrate 11.

Arranged for rotation about longitudinal axis 12 intermediate light source assembly 14 and light directing apparatus 20 is apparatus 22 for transmitting light from the multi-beam light source assembly 14 to the light directing apparatus 20 substantially without inaccuracies which are functions of the period of rotation of the light directing apparatus about the longitudinal axis.

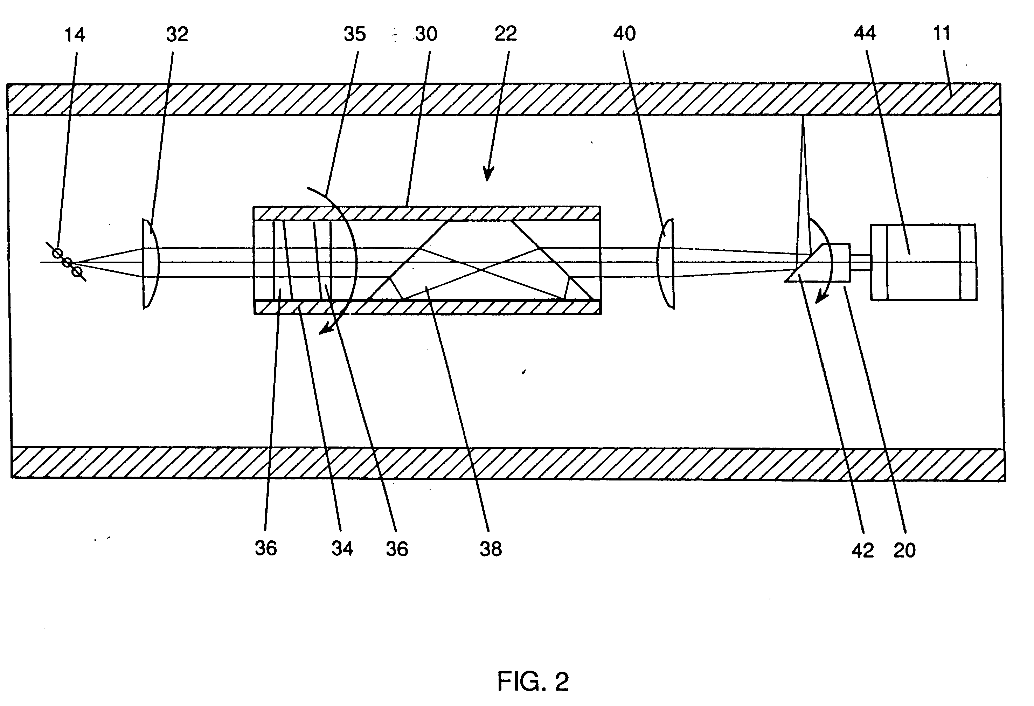

Reference is now made additionally to Fig. 2, which illustrates one preferred embodiment of an internal drum plotter constructed and operative in accordance with the present invention. In accordance with a preferred embodiment of the present invention, as illustrated in Fig. 2, the apparatus 22 for transmitting light comprises image rotating apparatus 30 which is disposed downstream of a collimating lens 32 and thus receives collimated beams of light from assembly 14.

The image rotating apparatus 30 preferably comprises a generally cylindrical housing 34, which is arranged for rotation about axis 12, as indicated by arrow 35. Disposed within housing 34 are a plurality of optical wedge prisms 36 together with an image rotation prism 38, such as a Dove prism, manufactured by Melles Griot of the Netherlands. The wedge prisms are configured and mutually arranged so as to correct inaccuracies in the manufacture and mounting of the Dove prism 38 and of the entire image rotating apparatus 30.

Downstream of image rotating apparatus 30 there is preferably provided a focusing lens 40, which directs light onto a rotating mirror surface 42 of light directing apparatus 20, which surface is rotated about axis 12 as by a motor 44. Mirror surface 42 directs the light onto the recording substrate 11.

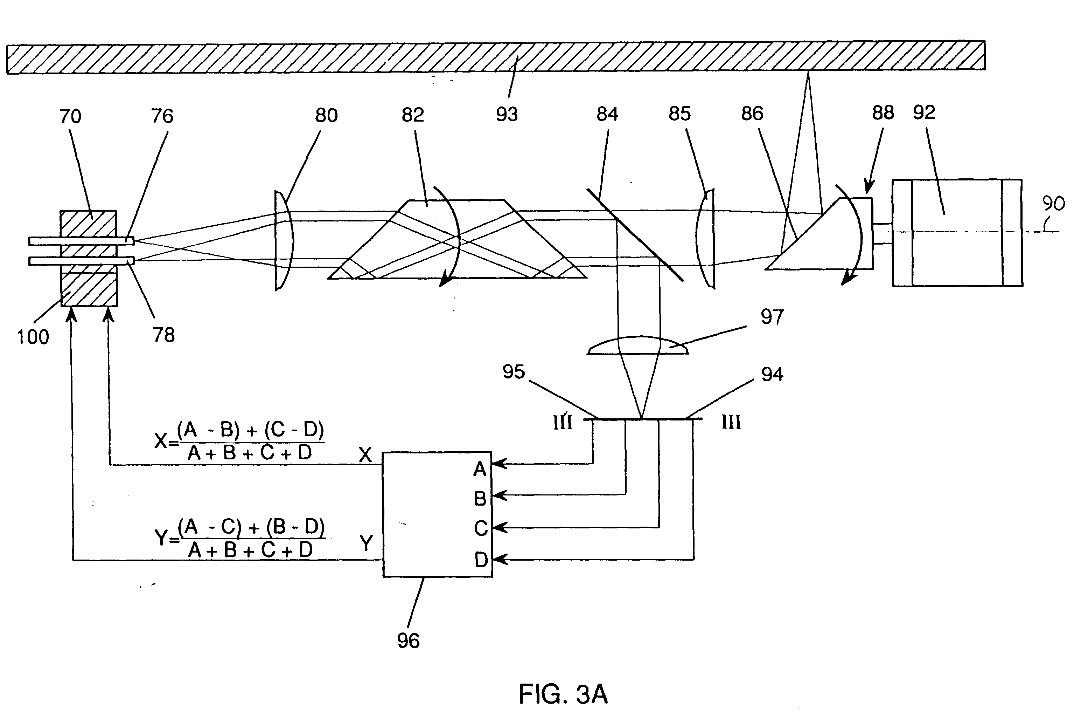

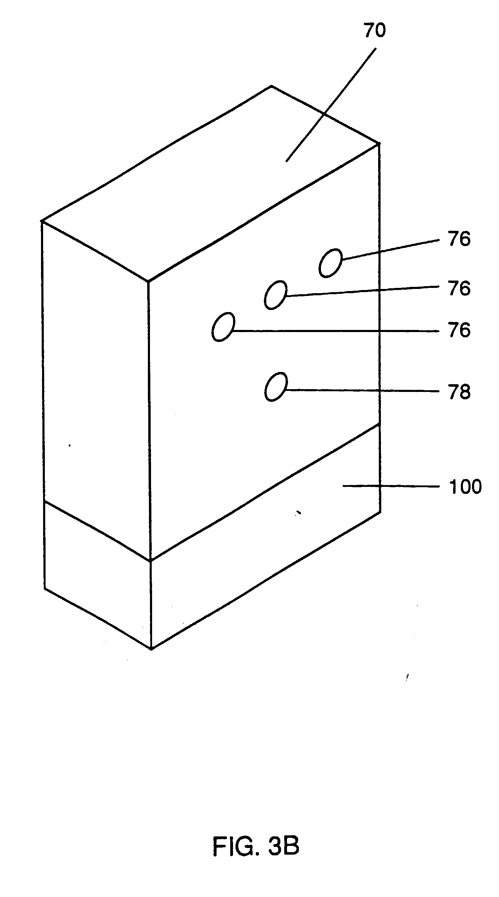

Reference is now made to Fig. 3A, which is an illustration of another preferred embodiment of an internal drum plotter constructed and operative in accordance with the present invention. As seen in Fig. 3B, in this embodiment a light source assembly 70 includes a row of spatially separated light sources 76, which are configured and arranged similarly to light sources 16 in the embodiment of Fig. 1. Light source assembly 70 also includes an additional light source 78, of a different color or polarization from that of light sources 76.

Light from light sources 76 and 78 passes through a collimating lens 80 which directs the light onto an image rotating prism 82, preferably a Dove prism, as described hereinabove in connection with Fig. 2. Wedges may also be provided as in the embodiment of Fig. 2 to provide partial correction.

Light leaving the Dove prism 82 impinges upon a beam splitter 84 which is axially fixed with respect to Dove prism 82 but does not rotate. Beam splitter 84 is preferably operative to pass the light from light sources 76 via a focusing lens 85 to a rotating mirror surface 86 of light directing apparatus 88, which surface is rotated about an axis 90 as by a motor 92. Mirror surface 86 directs the light onto the recording substrate 93.

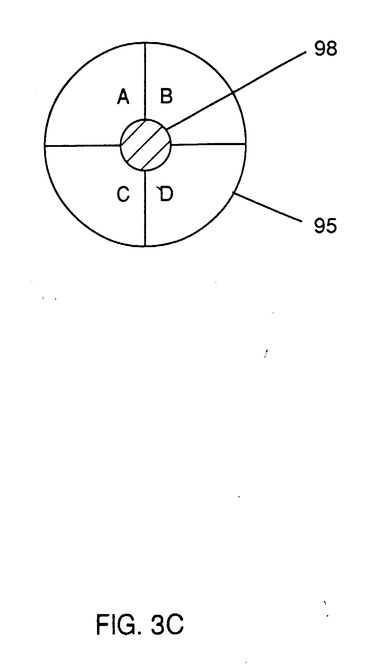

Beam splitter 84 directs the light from light source 78 via a focusing lens 97 to detector apparatus 94 for sensing inaccuracies in light transmission to the light directing apparatus 88. Preferably the detector apparatus 94 comprises a Model 431 X-Y optical position indicator, manufactured by UDT of Hawthorne, California, U.S.A, including a detector portion 95 and a correction unit 96. The location of a spot of light 98 on the image plane of the detector portion 95 is illustrated in Fig. 3C, taken along lines III - III in Fig. 3A.

Four electrical current outputs from detector portion 95, labeled A, B, C and D are supplied to correction unit 96 which provides X and Y position correction outputs to positioning apparatus 100 which positions assembly 70 in accordance therewith with respect to axis 90 and in a plane perpendicular thereto.

It is appreciated that the apparatus described hereinabove provides feedback responsive to the sensed inaccuracies for correcting the relative orientations of the multi-beam light source assembly, the light directing apparatus and the apparatus for transmitting light in order to remove the sensed inaccuracies.

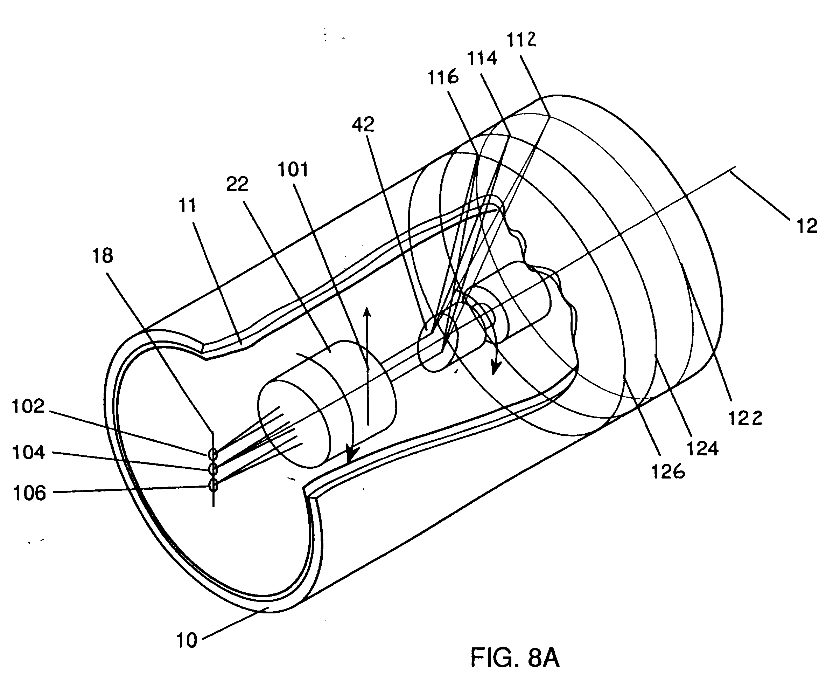

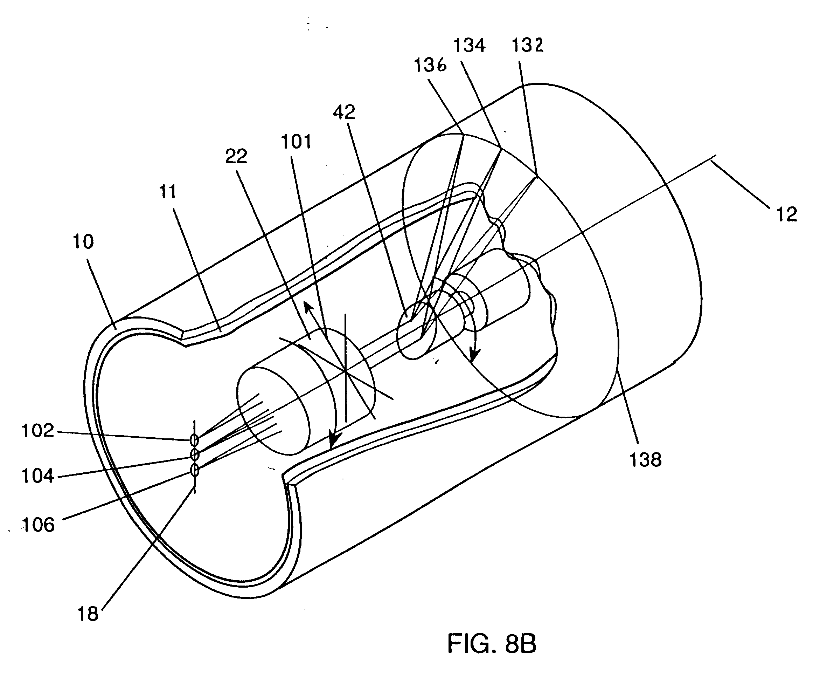

Reference is now made to Figs. 8A and 8B, which illustrate the effects of varying the angular relationship between the Dove prism 38, the mirror surface 42 and the axis 18 along which the various light sources 16 are separated.

From a consideration of Fig. 8A, it is seen that when the axis 18 is parallel to the normal 101 to the base of the Dove prism and the normal to mirror surface 42 is coplanar with axis 18, a maximum axial separation along axis 12 is realized for the impingement locations of the separate beams on the substrate 11.

Thus, as seen in Fig. 8A, light emitted from light sources 102, 104 and 106 is received at respective axially separated locations 112, 114 and 116 on the substrate 11.

It is appreciated that the separation is maintained during scanning by rotating the mirror surface 42 at a first rotation rate about axis 12 and rotating of the Dove prism in apparatus 22 in the same direction at one half of the first rotation rate, thus providing respective scan lines 122, 124 and 126.

From a consideration of Fig. 8B, it is seen that when the axis 18 is at 45 degrees with respect to the normal 101 to the base of the Dove prism and the normal to the mirror surface 42 is coplanar with axis 18, a zero axial separation along axis 12 is realized for the impingement locations of the separate beams on the substrate 11 and the impingement locations are angularly separated in a plane which lies normal to axis 12.

Thus, as seen in Fig. 8B, light emitted from light sources 102, 104 and 106 is received at respective angularly separated locations 132, 134 and 136 on the substrate 11.

It is appreciated that the separation is maintained during scanning by rotating the mirror surface 42 at a first rotation rate about axis 12 and rotating of the Dove prism in apparatus 22 in the same direction at one half of the first rotation rate, thus providing a single scan 138.

It is appreciated that when the orientation of axis 18 lies between the two extremes illustrated in Figs. 8A and 8B, the impingement locations on the substrate are separate both axially and angularly, albeit by amounts less than the extreme amounts illustrated in Figs. 8A and 8B. In this manner, the resolution of the separation of scanning lines is controlled.

It is appreciated that the functionality described above in connection with Figs. 8A and 8B, applies equally to the embodiment of Figs. 3A - 3C.

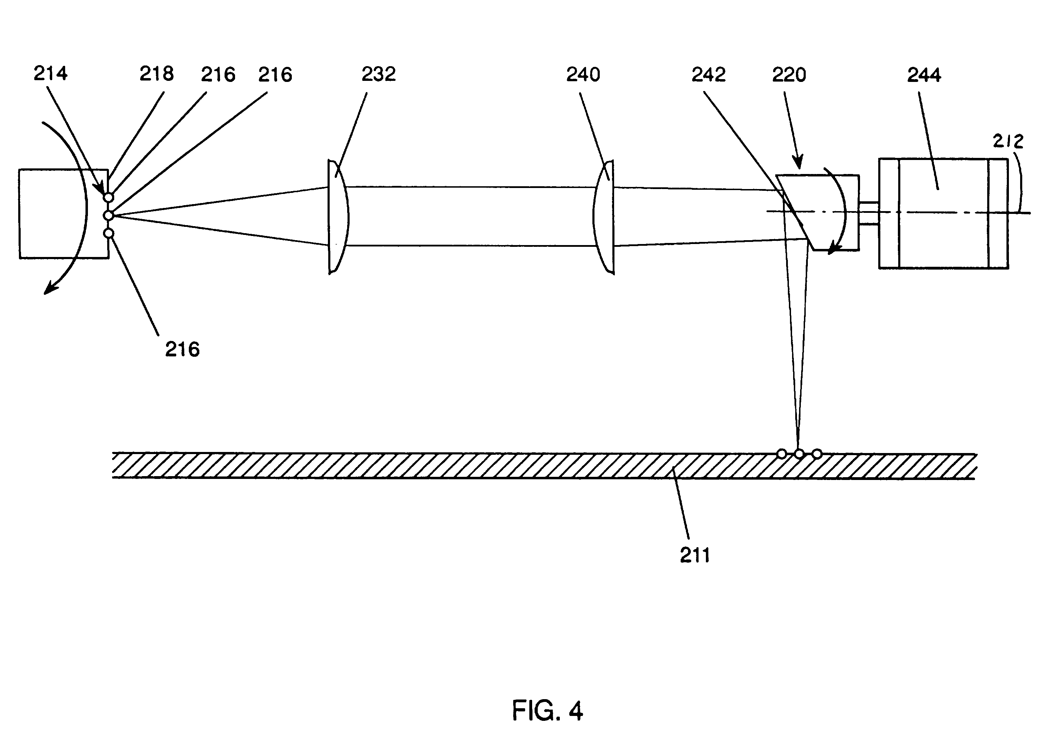

Reference is now made to Fig. 4, which is an illustration of one preferred embodiment of an internal drum plotter constructed and operative in accordance with the invention wherein the light source assembly rotates at the same speed as the light directing apparatus.

The internal drum plotter of Fig. 4 is arranged to write on a substrate 211 which is maintained in a generally cylindrical configuration about a longitudinal axis 212.

A multi-beam light source assembly 214 is disposed for rotation about axis 212 at a first location along the longitudinal axis 212. The location may be axially fixed, or alternatively may move axially along the longitudinal axis 212. Preferably light source assembly 214 comprises a plurality of light sources 216, which are separated from each other along an axis 218 perpendicular to the longitudinal axis 212.

Disposed for rotation about longitudinal axis 212 together with assembly 214 is light directing apparatus 220, which is operative to direct light received from the multi-beam light source assembly 214 to the recording substrate 211.

A colliminating lens 232 and a focussing lens 240 are disposed intermediate assembly 214 and light directing apparatus 220. Preferably these lenses do not rotate.

A rotating mirror surface 242 of light directing apparatus 220 is rotated by a motor 244 and directs the light onto the recording substrate 211. It is appreciate the spots of light from the individual light sources 216 impinge on the substrate 211 at axially separated locations therealong.

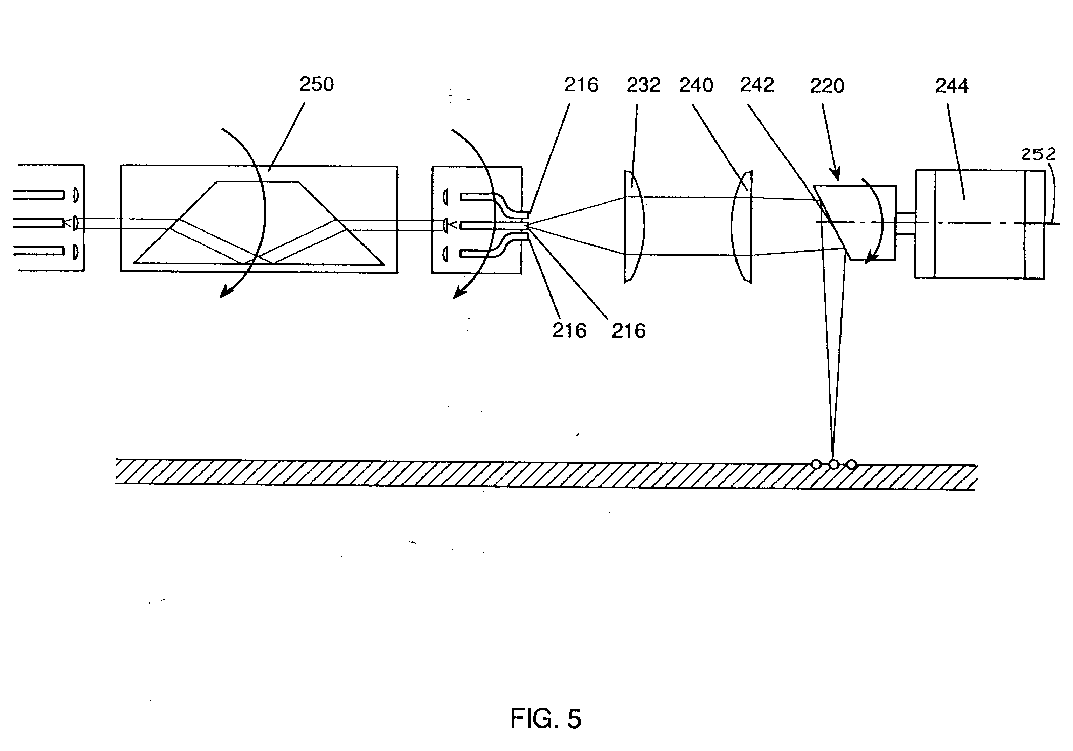

Reference is now made to Fig. 5, which is an illustration of one embodiment of rotating multi-beam light source assembly in the internal drum plotter of Fig. 4. In the embodiment of Fig. 5, the rotating light source assembly comprises a optical rotary joint, indicated generally by reference numeral 250. A suitable optical rotary joint is described in European Patent 0111390. The optical rotary joint 250 receives multibeam light inputs from any suitable source and provides a multibeam light output which rotates about an axis 252. The remainder of the scanner may be as illustrated in Fig. 4.

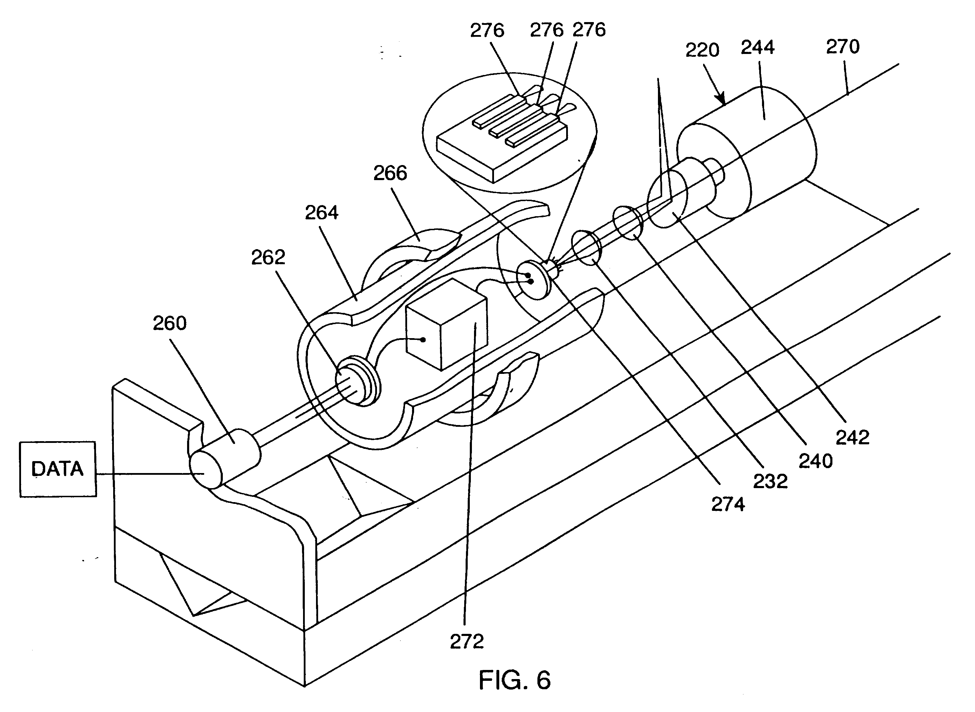

Reference is now made to Fig. 6, which is a simplified pictorial illustration of another embodiment of rotating multibeam light source assembly in the internal drum plotter of Fig. 4. In the embodiment of Fig. 6, data is supplied to a wireless transmitter 260 which provides an optical beam to a receiver 262 which is mounted in a housing 264 which is rotated by a motor, partially indicated by reference number 266, about an axis 270.

Also disposed in housing 264 is a power supply 272, such as a battery which powers receiver 262 and a rotating light source assembly 274, which typically includes multiple light sources 276. The light sources 276 of assembly 274 are illuminated in accordance with the received data, which is communicated to assembly 274 by wires connected to receiver 262. The remainder of the scanner may be as illustrated in Fig. 4.

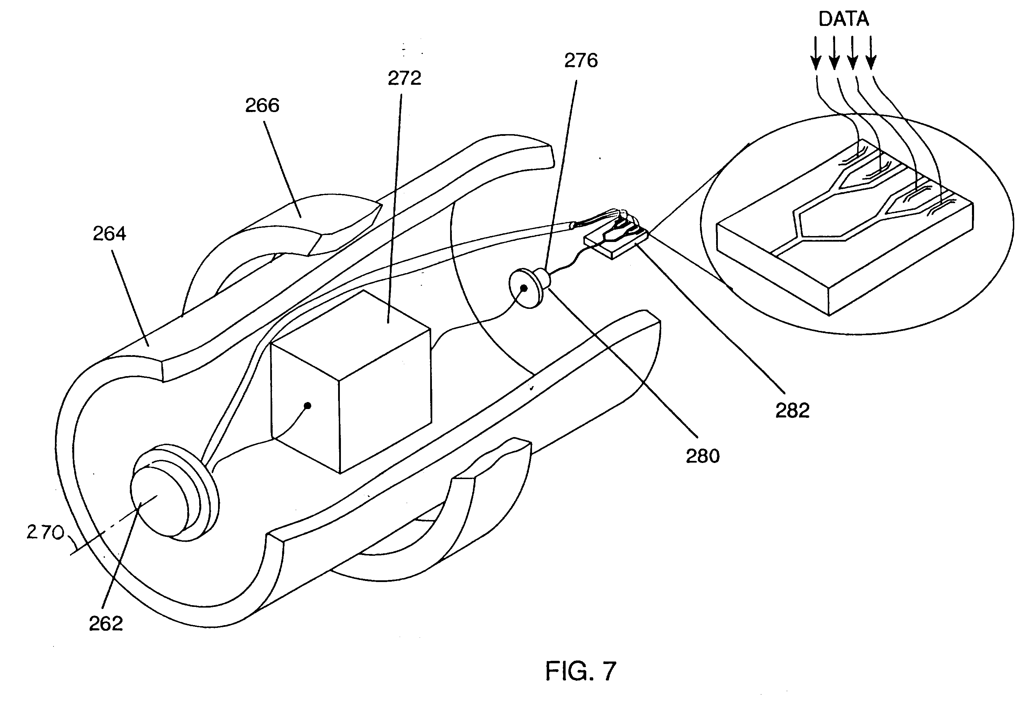

Reference is now made to Fig. 7, which is a simplified pictorial illustration of part of yet another embodiment of rotating multi-beam light source assembly in the internal drum plotter of Fig. 4. In the embodiment of Fig. 7, and similarly to that of Fig. 6, data is received by a receiver 262 which is mounted in a housing 264,rotated by a motor, partially indicated by reference number 266, about an axis 270.

Also disposed in housing 264 is a power supply 272, such as a battery which powers receiver 262 and a rotating light source assembly 276. Light source assembly 276 differs from assembly 274 in the embodiment of Fig. 6 in that a single light source 280 is employed and provides, typically via optical fibers, a light input to a multichannel light modulator 282, which receives the data from receiver 262. The light modulator 282 provides light outputs in accordance with the received data. The remainder of the scanner may be as illustrated in Fig. 4.

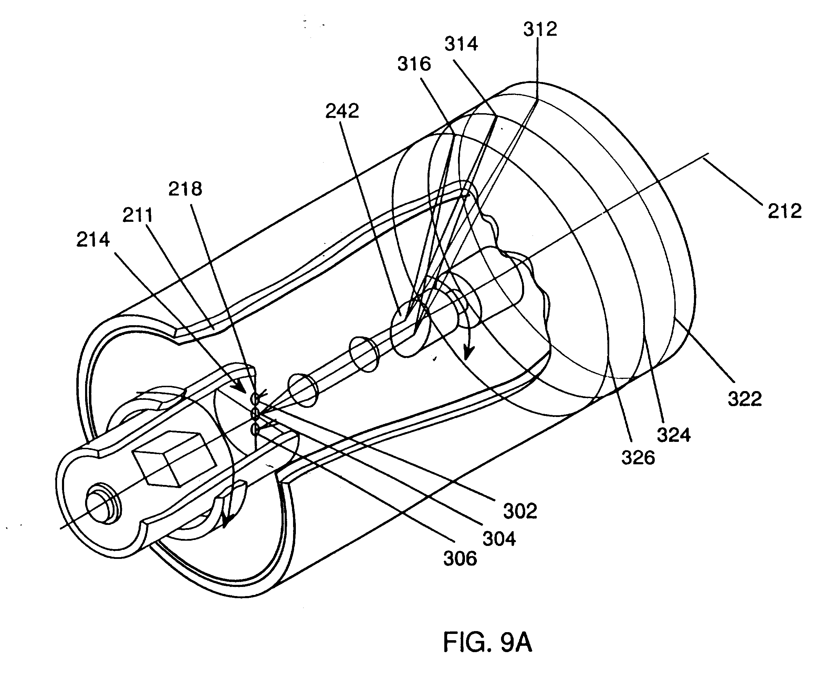

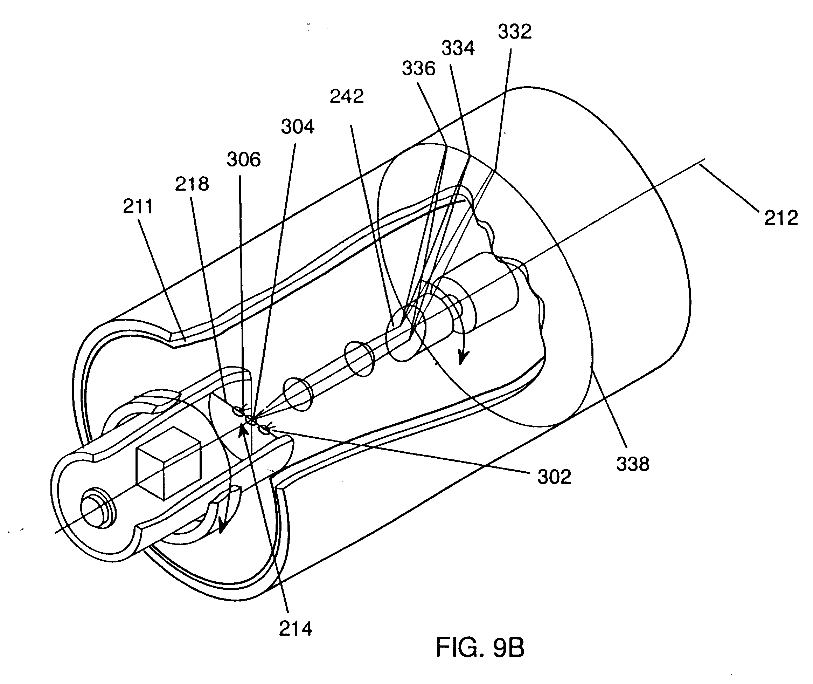

Reference is now made to Figs. 9A and 9B, which illustrate the effects of varying the angular relationship between the mirror surface 242 and the axis 218 along which the various light sources 216 are separated.

From a consideration of Fig. 9A, it is seen that when the normal to mirror surface 242 is coplanar with axis 218, a maximum axial separation along axis 212 is realized for the impingement locations of the separate beams on the substrate 211.

Thus, as seen in Fig. 9A, light emitted from light sources 302, 304 and 306 is received at respective axially separated locations 312, 314 and 316 on the substrate 211.

It is appreciated that the separation is maintained during scanning by rotating the assembly 214 and mirror surface 242 together about axis 212, thus providing respective scan lines 322, 324 and 326.

From a consideration of Fig. 9B, it is seen that when the axis 218 is at 90 degrees with respect to both the normal to the mirror surface 242 and the axis 212, a zero axial separation along axis 212 is realized for the impingement locations of the separate beams on the substrate 211 and the impingement locations are angularly separated in a plane which lies normal to axis 212.

Thus, as seen in Fig. 9B, light emitted from light sources 302, 304 and 306 is received at respective angularly separated locations 332, 334 and 336 on the substrate 211.

It is appreciated that the separation is maintained during scanning by rotating the assembly 214 together with mirror surface 242 about axis 212, thus providing a single scan 338.

It is appreciated that when the orientation of axis 218 lies between the two extremes illustrated in Figs. 9A and 9B, the impingement locations on the substrate are separate both axially and angularly, albeit by amounts less than the extreme amounts illustrated in Figs. 9A and 9B. In this manner, the resolution of the separation of scanning lines is controlled.

It is appreciated that the functionality described above in connection with Figs. 9A and 9B, applies equally to the embodiments of Figs. 5 - 7.

## Claims

1. An internal drum plotter including apparatus (10) for mounting a recording substrate (11) in a generally cylindrical configuration about a longitudinal axis (12);
a multi-beam light source assembly (14) disposed at a first location along the longitudinal axis, and including a plurality of light sources (16) which are separated from each other along an axis (18) perpendicular to the longitudinal axis (12);
light directing apparatus (20) operative to direct light received from the multi-beam light source assembly to the recording substrate; and
apparatus (22) for transmitting light from said multi-beam light source assembly to said light directing apparatus including image rotating apparatus (30) disposed along the longitudinal axis (12) and characterised by;
detector apparatus (94) for sensing inaccuracies in light transmission to the light directing apparatus (20) and feedback apparatus (96) responsive to the sensed inaccuracies for correcting the relative orientations of at least one of the multi-beam assembly (14), the light directing apparatus (20), and the apparatus (22) for transmitting light, in order to remove the sensed inaccuracies.

2. An internal drum plotter including apparatus (10) for mounting a recording substrate (11) in a generally cylindrical configuration about a longitudinal axis (12):
a multi-beam light source assembly (14) disposed at a first location along the longitudinal axis, and including a plurality of light sources (16) which are separated from each other along an axis (18) perpendicular to the longitudinal axis (12);
light directing apparatus (20) operative to direct light received from the multi-beam light source assembly to the recording substrate; and
apparatus (22) for transmitting light from said multi-beam light source assembly to said light directing apparatus including image rotating apparatus (30) disposed along the longitudinal axis (12) and characterised by;
at least one optical wedge (36) in operative engagement with the image rotating apparatus for substantially eliminating inaccuracies resulting from inaccuracies in manufacture and mounting of the image rotating apparatus and the apparatus for rotating same.

3. Apparatus as claimed in claim 1 or 2, wherein said multi-beam light source assembly (14, 274) is operative to rotate at the same speed as the light directing apparatus (20).

4. Apparatus as claimed in claim 3, wherein the light transmitting apparatus (22) comprises a pair of lenses (32, 40) which are fixed with respect to the longitudinal axis (12) and to the substrate (11).

5. Apparatus as claimed in claim 3 or 4, wherein the light source assembly (274) comprises a rotary optical joint (250).

6. Apparatus as claimed in any one of claims 3 to 5, wherein a data input is provided to the light sources (102,104,106) using an electrical rotary joint (250).

7. Apparatus as claimed in any one of claims 3 to 5, wherein a data input is provided to the light sources (102,104,106) in a wireless manner.

8. Apparatus as claimed in any one of claims 3 to 5, wherein the rotating light source assembly (274) includes a power supply (272) which rotates together with a plurality of light sources (16).

9. Apparatus as claimed in any one of claims 3 to 5, wherein the rotating light source assembly (274) comprises an integrated optical element (280) receiving an electrical data input.

## Patentansprüche

1. Plotter mit innenaufzeichnender Trommel, enthaltend eine Einrichtung (10) zum Anbringen eines Aufzeichnungssubstrats (11) in einer im wesentlichen zylindrisch um eine Längsachse (12) ausgebildeten Konfiguration;
eine Mehrstrahlen-Lichtquellenanordnung (14), die an einer ersten Stelle entlang der Längsachse angeordnet ist und die mehrere Lichtquellen (16) aufweist, welche getrennt voneinander entlang einer Achse (18) angeordnet sind, die senkrecht zu der Längsachse (12) verläuft;
eine Lichtausrichteinrichtung (20), die Licht, welches von der Mehrstrahlen-Lichtquellenanordnung empfangen wird, auf das Aufzeichnungssubstrat ausrichtet, und
eine Einrichtung (22) zum Übertragen von Licht aus der Mehrstrahlen-Lichtquellenanordnung zu der Lichtausrichteinrichtung, die eine Bilddreheinrichtung (30) aufweist, welche entlang der Längsachse (12) angeordnet ist,
gekennzeichnet durch eine Erfassungseinrichtung (94) zum Erfassen von Ungenauigkeiten bei der Lichtübertragung an die Lichtausrichteinrichtung (20) und durch eine Rückführeinrichtung (96), die auf die erfaßten Ungenauigkeiten anspricht, um die relativen Ausrichtungen von zumindest einer Einrichtung, der Mehrstrahlenanordnung (14), der Lichtausrichteinrichtung (20) und der Einrichtung (22) zum Übertragen von Licht zu ändern, so daß die erfaßten Ungenauigkeiten beseitigt werden.

2. Plotter mit innenaufzeichnender Trommel, enthaltend eine Einrichtung (10) zum Anbringen eines Aufzeichnungssubstrats (11) in einer im wesentlichen zylindrisch um eine Längsachse (12) ausgebildeten Konfiguration,
eine Mehrstrahlen-Lichtquellenanordnung (14), die an einer ersten Stelle entlang der Längsachse angeordnet ist und die mehrere Lichtquellen (16) aufweist, welche getrennt voneinander entlang einer Achse (16) angeordnet sind, die senkrecht zu der Längsachse (12) verläuft,
eine Lichtausrichteinrichtung (20), die Licht, welches aus der Mehrstrahlen-Lichtquellenanordnung empfangen wird, auf das Aufzeichnungssubstrat ausrichtet, und eine Einrichtung (22) zum Übertragen von Licht aus der Mehrstrahlen-Lichtquellenanordnung auf die Lichtausrichteinrichtung, die eine Bilddreheinrichtung (30) aufweist, welche entlang der Längsachse (12) angeordnet ist,
gekennzeichnet durch zumindest einen optischen Keil (36), der mit der Bilddreheinrichtung zusammenwirkt, um die Ungenauigkeiten im wesentlichen zu beseitigen, die sich aus den Ungenauigkeiten bei der Herstellung und Montage der Bilddreheinrichtung sowie der Einrichtung zum Drehen der Bilddreheinrichtung ergeben.

3. Vorrichtung nach Anspruch 1 oder 2,
bei der die Mehrstrahlen-Lichtquellenanordnung (14, 274) mit der gleichen Geschwindigkeit wie die Lichtausrichteinrichtung (20) gedreht wird.

4. Vorrichtung nach Anspruch 3,
bei der die Lichtübertragungseinrichtung (22) ein Paar Linsen (32, 40) aufweist, die gegenüber der Längsachse (12) und dem Substrat (11) ortsfest angebracht sind.

5. Vorrichtung nach Anspruch 3 oder 4,
bei der die Lichtquellenanordnung (274) eine optische Drehverbindung (250) aufweist.

6. Vorrichtung nach einem der Ansprüche 3 bis 5,
bei der eine Dateneingabe für die Lichtquellen (102, 104, 106) unter Verwendung einer elektrischen Drehverbindung (250) vorgesehen ist.

7. Vorrichtung nach einem der Ansprüche 3 bis 5,
bei der eine Dateneingabe an die Lichtquellen (102, 104, 106) in einer drahtlosen Weise vorgesehen ist.

8. Vorrichtung nach einem der Ansprüche 3 bis 5,
bei der die sich drehende Lichtquellenanordnung (274) eine Energiequelle (272) aufweist, die sich zusammen mit mehreren Lichtquellen (16) dreht.

9. Vorrichtung nach einem der Ansprüche 3 bis 5,
bei der die sich drehende Lichtquellenanordnung (274) ein integriertes, optisches Element (280) aufweist, welches eine elektrische Dateneingabe empfängt.

## Revendications

1. Traceur à tambour intérieur incluant:
un appareil (10) pour monter un substrat d'enregistrement (11) selon une configuration de forme générale cylindrique autour d'un axe longitudinal (12);
un assemblage de sources de lumière multifaisceau (14) disposé en un premier emplacement suivant l'axe longitudinal et incluant une pluralité de sources de lumière (16) qui sont séparées les unes des autres suivant un axe (18) perpendiculaire à l'axe longitudinal (12);
un appareil de direction de lumière (20) fonctionnant pour diriger une lumière reçue depuis l'assemblage de sources de lumière multifaisceau sur le substrat d'enregistrement; et
un appareil (22) pour transmettre la lumière provenant dudit assemblage de sources de lumière multifaisceau sur ledit appareil de direction de lumière, incluant un appareil de rotation d'image (30) disposé suivant l'axe longitudinal (12), et caractérisé par:
un appareil de détecteur (94) pour détecter des imprécisions au niveau de la transmission de la lumière sur l'appareil de direction de lumière (20) et un appareil de retour (96) sensible aux imprécisions détectées pour corriger les orientations relatives d'au moins un dispositif pris parmi l'assemblage multifaisceau (14), l'appareil de direction de lumière (20) et l'appareil (22) pour transmettre la lumière, afin d'ôter les imprécisions détectées.

2. Traceur à tambour intérieur incluant:
un appareil (10) pour monter un substrat d'enregistrement (11) selon une configuration de forme générale cylindrique autour d'un axe longitudinal (12);
un assemblage de sources de lumière multifaisceau (14) disposé en un premier emplacement suivant l'axe longitudinal et incluant une pluralité de sources de lumière (16) qui sont séparées les unes des autres suivant un axe (18) perpendiculaire à l'axe longitudinal (12);
un appareil de direction de lumière (20) fonctionnant pour diriger une lumière reçue depuis l'assemblage de sources de lumière multifaisceau sur le substrat d'enregistrement; et
un appareil (22) pour transmettre la lumière provenant dudit assemblage de sources de lumière multifaisceau sur ledit appareil de direction de lumière, incluant un appareil de rotation d'image (30) disposé suivant l'axe longitudinal (12), et caractérisé par:
au moins un coin optique (36) coopérant en fonctionnement avec l'appareil de rotation d'image pour éliminer de manière significative des imprécisions résultant d'imprécisions lors de la fabrication et du montage de l'appareil de rotation d'image et de l'appareil pour entraîner en rotation celui-ci.

3. Appareil selon la revendication 1 ou 2, dans lequel ledit assemblage de sources de lumière multifaisceau (14, 274) fonctionne pour tourner à la même vitesse que l'appareil de direction de lumière (20).

4. Appareil selon la revendication 3, dans lequel l'appareil de transmission de lumière (22) comprend deux lentilles (32, 40) qui sont fixes par rapport à l'axe longitudinal (12) et au substrat (11).

5. Appareil selon la revendication 3 ou 4, dans lequel l'assemblage de sources de lumière (274) comprend un joint optique tournant (250).

6. Appareil selon l'une quelconque des revendications 3 à 5, dans lequel une entrée de données est appliquée sur les sources de lumière (102, 104, 106) en utilisant un joint tournant électrique (250).

7. Appareil selon l'une quelconque des revendications 3 à 5, dans lequel une entrée de données est appliquée sur les sources de lumière (102, 104, 106) d'une manière sans fil.

8. Appareil selon l'une quelconque des revendications 3 à 5, dans lequel l'assemblage de sources de lumière tournant (274) inclut une alimentation (272) qui tourne en association avec une pluralité de sources de lumière (16).

9. Appareil selon l'une quelconque des revendications 3 à 5, dans lequel l'assemblage de sources de lumière tournant (274) comprend un élément optique intégré (280) qui reçoit une entrée de données électrique.
